**Europäisches Patentamt**

**European Patent Office**

**Office européen des brevets**

(19)

(11) Veröffentlichungsnummer: **0 161 535**
**B1**

(12) # EUROPÄISCHE PATENTSCHRIFT

(45) Veröffentlichungstag der Patentschrift:
**21.06.89**

(51) Int. Cl.⁴: **G 01 N 1/20,** G 01 N 1/04

(21) Anmeldenummer: **85104796.9**

(22) Anmeldetag: **20.04.85**

(54) Entnahmevorrichtung für Feststoffproben.

(30) Priorität: **17.05.84 DE 3418311**

(43) Veröffentlichungstag der Anmeldung:
**21.11.85 Patentblatt 85/47**

(45) Bekanntmachung des Hinweises auf die Patenterteilung:
**21.06.89 Patentblatt 89/25**

(84) Benannte Vertragsstaaten:
**DE FR GB**

(56) Entgegenhaltungen:
**DE-B-1 215 962**
**DE-C-394 679**
**US-A-3 129 590**
**US-A-4 009 618**

(73) Patentinhaber: **Bergwerksverband GmbH, Franz-Fischer- Weg 61, D-4300 Essen 13 (DE)**

(72) Erfinder: **Wagener, Heinrich, Mettestrasse 9, D-4630 Bochum 1 (DE)**
Erfinder: **Kirchhoff, Reinhold, Dr.- Ing, Hombergsring 56, D-4320 Hattingen 16 (DE)**
Erfinder: **van Heek, Karl Heinrich, Priv. Doz. Dr. rer. nat, Fährenkotten 3, D-4300 Essen 15 (DE)**
Erfinder: **Jüntgen, Harald, Prof. Dr. rer. nat, Bonscheidter Strasse 79, D-4300 Essen (DE)**

EP 0 161 535 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine Entnahmevorrichtung für Feststoffproben aus einem Behälter, bei der ein Entnahmekolben mit einen Proberaum bildenden und zu diesem gasdurchlässigen Kolbenringen über eine mit einem Antrieb versehene Kolbenstange in einem Probeentnahmerohr bewegt wird, das am reaktorseitigen Ende offen ist und die Reaktorwand durchdringt und das eine Entnahmeöffnung aufweist, an die ein Austragsschacht angeschlossen ist, wobei eine Gaszuführung zur Spülung des Probenraumes vorgesehen ist.

Eine solche Entnahmevorrichtung ist aus dem Dokument DE-B-1 215 962 bekannt.

Bei chemischen und physikalischen Prozessen, insbesondere bei Pyrolyse- und Vergasungsvorgängen, die in druckbetriebenen Wirbelschichtreaktoren ablaufen, sind Kenntnisse über die chemische und physikalische Veränderung des Korns, z. B, des Kohlekorns in der Wirbelschicht erwünscht, weil insbesondere das hydrodynamische Verhalten der Wirbelschicht durch Korngrößenveränderungen beeinflußt wird. Derartige Untersuchungen sind bisher nur im Labormaßstab durchgeführt worden.

Der Erfindung liegt, ausgehend von einer Entnahmevorrichtung der eingangs genannten Gattung, die Aufgabe zugrunde, repräsentative Feststoffproben unmittelbar aus der betriebenen heißen Wirbelschicht zu entnehmen, wobei die Probe in ihrer Feststoffsubstanz chemisch und physikalisch unverfälscht und im Kornaufbau unbeschädigt anfallen soll.

Diese Aufgabe wird durch die im Kennzeichen des Anspruches 1 beschriebenen Merkmale gelöst.

Zweckmäßige Weiterbildungen und Ausgestaltungen sind in den Unteransprüchen dargestellt.

Mit der erfindungsgemäßen Entnahmevorrichtung gelingt es, heiße Feststoffproben, die noch aggressive Rohgasanteile enthalten, auf ihrem Transportweg vom Druckreaktor zur Ausschleusstelle von dem aggressiven Rohgasanteil durch Spülen zu befreien und dabei gleichzeitig zu kühlen. In Ruhestellung verhindert ständig strömendes Spülgas das Eindringen von Rohgas und Feststoffpartikeln in den Entnahmekolben. Beim Zurückfahren des Entnahmekolbens, das vorzugsweise mittels Windenkraft geschieht, wird der im Probeentnahmerohr nachgeflossene Feststoff in den Prozeßraum zurückgedrückt, was durch den ständigen Spülvorgang problemlos möglich ist.

Zweckmäßig werden die Entnahmekolben aus mehreren Kolbenblechen hergestellt, zwischen denen gasdurchlässige Isolierschichten angeordnet sind.

Zweckmäßig wird auch das Probeentnahmerohr am Ende durch eine Isolierbuchse verschlossen.

Vorzugsweise ist die Kolbenstange über O-Ringe und eine Notstopfbuchse aus dem Probenahmebehälter herausgeführt und auf einer Rollenbahn verlagert, wobei die Kolbenbewegung über eine außerhalb angebrachte Winde durchgeführt und gesteuert wird.

Die Ausschleusvorrichtung für die Feststoffproben besteht zweckmäßig aus einem Ausschleustrichter im Probeentnahmebehälter, aus dem die Feststoffprobe über ein doppeltes Schleusensystem in den Auffangbehälter gelangt.

Aus dem Dokument US-A-3 129 590 ist eine Entnahmevorrichtung für Feststoffproben aus einem Druckreaktor bekannt, bei dem die Feststoffprobe durch eine Öffnung eines Außenrohres in die Probenkammer eines Innenrohres infolge Schwerkrafteinwirkung gelangt und in dem Innenrohr bis zu einer außerhalb des Reaktors liegenden Ausschleusstelle gleitet, woraufhin die Probenkammer durch Drehen des Innenrohres vom Reaktorraum abgetrennt wird, wodurch die Feststoffprobe unter Schwerkrafteinfluß einer Ausschleusvorrichtung aufgegeben wird. Bei dieser Ausschleusvorrichtung handelt es sich jedoch um eine einfache Schleuse und nicht um eine Doppelschleuse wie beim Erfindungsgegenstand.

Die Erfindung wird nachfolgend anhand der Zeichnungen beispielhaft beschrieben. Es zeigen:

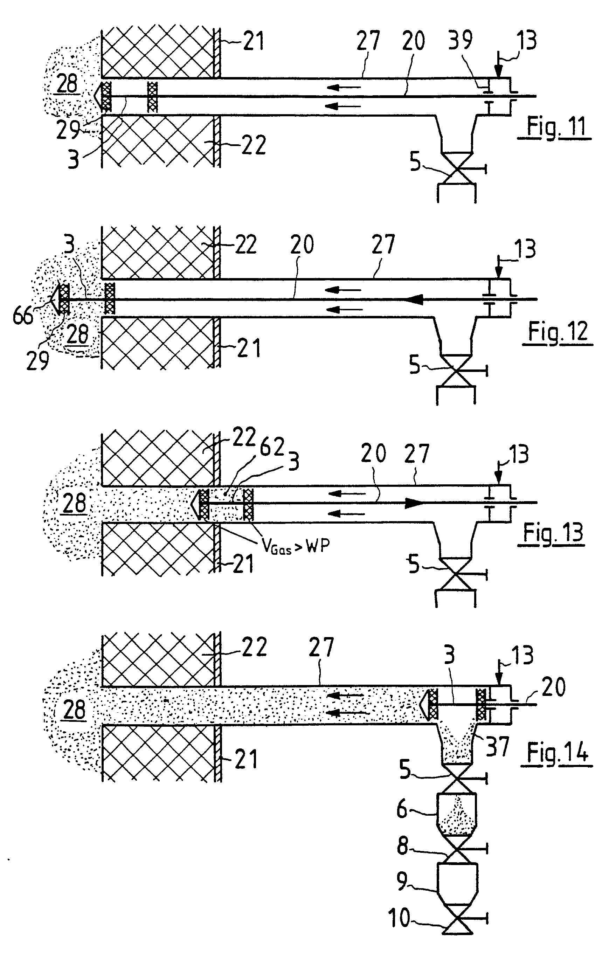

Figur 1    eine Übersichtsdarstellung der Entnahmevorrichtung für Feststoffproben;
Figur 2    eine Schnittdarstellung des Probeentnahmerohres und des Probenahmebehälters;
Figur 3    einen Querschnitt A - B des Probeausschleusbereiches im Probenahmebehälter;
Figur 4    eine Darstellung der Rollenbahn für die Kolbenstange;
Figur 5    einen Querschnitt C - D der Rollenbahn;
Figur 6    eine Teilansicht mit der Kolbenstellung im Bereich der Rollenbahn für einen Probenhub von 85 mm;
Figur 7    den Gegenstand der Figur 6 für einen Probenhub von 35 mm;
Figur 8    den Gegenstand der Figur 6 in Ruhestellung;
Figur 9    einen Längsschnitt des Entnahmekolbens;
Figur 10   die Ansicht eines Kolbenbleches des Entnahmekolbens;
Figuren 11 das Prinzip der Probeentnahme mit der erfindungsgemäßen Entnahmevorrichtung für
bis 14     Feststoffproben unter Druck und Temperatur; wobei
Figur 11   die Ruhestellung des Entnahmekolbens,
Figur 12   die Probeentnahmestellung des Kolbens,
Figur 13   die Hubbewegung zum Ausschleusbereich und
Figur 14   den Entnahmekolben in Ausschleusstellung wiedergeben.

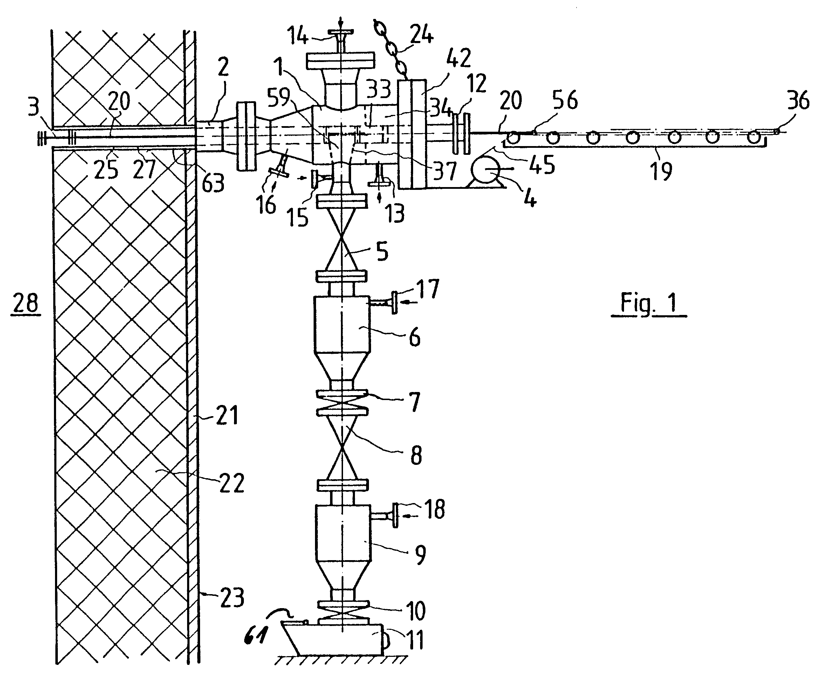

Aus Figur 1 gehen Aufbau und Prinzip der Entnahmevorrichtung für Feststoffproben hervor. Ein Probeentnahmebehälter 1 ist über einen Anschlußstutzen 2 mit einem Druckbehälter, im Beispiel einen Wirbelschichtdruckreaktor 23 verbunden, der von einer äußeren metallischen Reaktorwand 21 und einer inneren, aus Isoliermauerwerk gebildeten Wandauskleidung 22 umgeben ist. Der Anschlußstutzen 2 schließt an eine Wandöffnung 63 an, die bis in den Innenraum, den sogenannten Prozeßraum, des Reaktors 23 führt, in dem sich im Beispiel ein unter maximal 850°C und 40 bar betriebenes Kohlewasserdampf-Wirbelbett 28 befindet.

In der Wandöffnung 63 ist ein Isolierdoppelrohr 25 angeordnet, das ein Probeentnahmerohr 27 enthält, das als Kolbenzylinder für einen Entnahmekolben 3 dient, mit dessen Hilfe die Feststoffproben aus dem Wirbelbett 28 entnommen werden.

Das Probeentnahmerohr 27 reicht bis in den Probeentnahmebehälter 1 hinein. Die darin untergebrachte Kolbenstange 20 ragt aus dem Probeentnahmebehälter 1 heraus und wird im Außenbereich von einer Rollenbahn 19 geführt. Ein Endflansch 42 enthält gasdichte O-Ringe und eine Not-Stopfbuchse 12, durch die hindurch die Kolbenstange 20 geführt ist. Der Probeentnahmebehälter 1 wird zusätzlich durch eine Halterung 24 abgesichert.

Die Kolbenstange 20 weist am Ende eine Führungsöse 56 auf, an die ein Windenseil 45 angeschlagen ist, das zu einer Winde 4 führt, mit deren Hilfe die Hin- und Herbewegung der Kolbenstange 20 gesteuert werden kann. Die Endstellung der Kolbenstange ist mit 36 bezeichnet, das ist die Stellung, in der, wie in Figur 1 angedeutet, der Entnahmekolben 3 in Ausschleusstellung über einem in dem Probeentnahmebehälter 1 montierten Ausschleustrichter 37 steht.

Der Probeentnahmebehälter 1 weist einen Sperrgasraum 34 auf, bis in den hinein das Probeentnahmerohr 27 reicht, das an seinem Ende mit einer Sperrbuchse 33 verschlossen ist, die mittig eine Durchgangsöffnung für den Kolben 20 aufweist.

Der Sperrgasraum 34 wird über einen Stutzen 13 mit Sperrgas beaufschlagt, das als Spül- und Kühlgas dient.

Am Probenahmebehälter 1 sind Spülgasstutzen 14, 15 und 16 angebracht, mit denen Hilfsspülungen mit dem Spül- und Kühlgas durchgeführt werden können.

Das Ausschleusen der Feststoffproben aus dem Ausschleustrichter 37 geschieht über einen ersten Feststoffschieber 5, eine erste Schleuse 6 mit Gasaufdrückstutzen 17 und einer ersten Verschlußklappe 7 sowie einem zweiten Feststoffschieber 8, einer zweiten Schleuse 9 mit Gasentspannstutzen 18 und einer zweiten Verschlußklappe 10, die die Feststoffprobe in einen Auffangbehälter 11 abgibt, der mit einem aufklappbaren Filterdeckel 61 ausgestattet ist.

Alle drucktragenden Teile sind aus hochfestem Stahl, im vorliegenden Beispiel aus VA-Stahl, gefertigt und die mit Hochtemperatur in Kontakt tretenden Teile aus einem warmfesten Stahl, im vorliegenden Beispiel aus Incoloy 800, gefertigt.

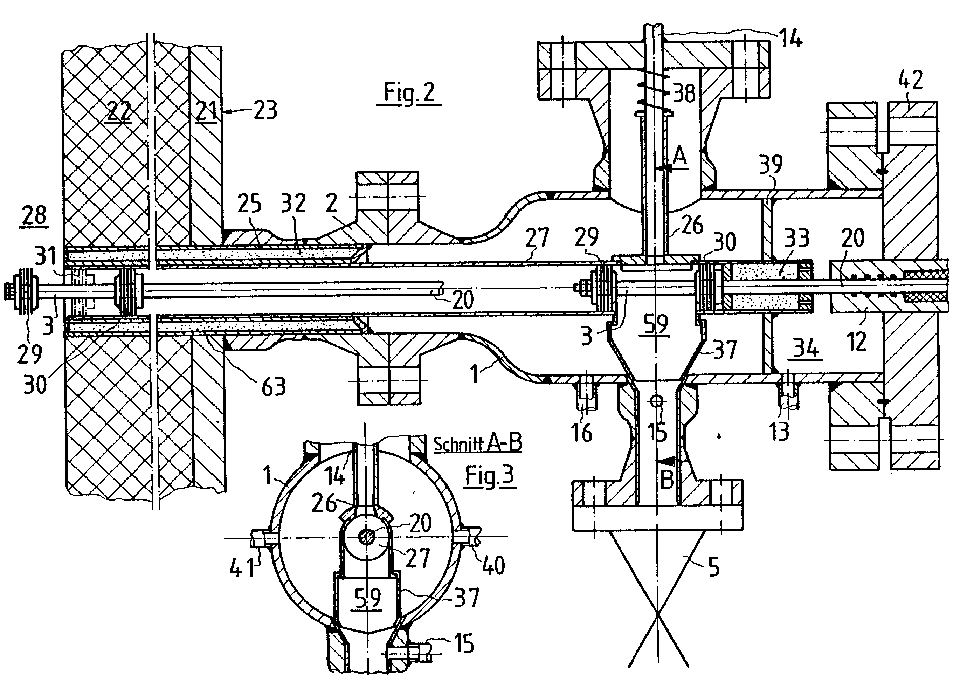

Die Figuren 2 und 3 zeigen Einzelheiten der Ausgestaltung des Probenahmeteils der Feststoffprobenahmevorrichtung. Das Isolierdoppelrohr 25 ist bis in den Flansch 2 hineingeführt und zur Vermeidung von Bypaßströmungen im Flansch 2 dichtgeschweißt. Der innere Durchmesser des Isolierdoppelrohres 25 dient gleichzeitig als Gleithülse für das Probeentnahmerohr 27. Letzteres ist in einer Bordscheibe 39 dichtgeschweißt und fixiert, die den im Probenahmebehälter 1 enthaltenen Sperrgasraum 34 vom übrigen Behälterinneren abtrennt. Sowohl das Isolierdoppelrohr 25 als auch das Probeentnahmerohr 27 können sich somit frei in Richtung Prozeßraum (Wirbelbett) 28 bewegen, wenn Temperaturdehnungen auftreten. Im Beispiel ist das Isolierdoppelrohr 25 mit hochtemperaturfester $Al_2O_3$-Wolle als Isolierfüllung 32 ausgefüllt. In der Figur 2 ist der Entnahmekolben 3, der aus einem vorderen Kolbenring 29 und aus einem hinteren Kolbenring 30 gebildet ist, einmal in Probenahmestellung und einmal in Ausschleusstellung abgebildet. In Ausschleusstellung befindet sich der Entnahmekolben 3 im Bereich der Entnahmeöffnung 59, die in den Ausschleustrichter 37 übergeht. Oberhalb der Entnahmeöffnung 59 ist eine weitere Öffnung vorgesehen, die durch einen Niederhalter 26 verschlossen ist, der auf dem Stutzen 14 geführt und über eine Feder 38 auf die Öffnung preßbar ist. Über den Stutzen 14, wie übrigens auch über die Stutzen 15 und 16, sowie 40 und 41, kann, wie bereits erwähnt, zusätzlich Spül- und Kühlgas in den Behälter 1 bzw. in den Ausschleusbereich 59, 37 aufgegeben werden, etwa um aufgetretene Verstopfungen zu beseitigen. Im Normalfall erfolgt die Aufgabe des Spül- und Kühlgases über den Stutzen 13, es dient gleichzeitig als Sperrgas für den Dichtungs- und Stopfbuchsenbereich der Teile 12 und 33. Das Spülgas strömt innerhalb und außerhalb des Probeentnahmerohres 27 in Richtung auf den Prozeßraum zu. Es kühlt dabei die Feststoffprobe, das Probeentnahmerohr 27 und die Kolbenstange 20. Gleichzeitig verhindert es das Eindringen von Feststoffpartikeln in den Spalt zwischen dem Isolierdoppelrohr 25 und den Probeentnahmerohr 27, damit sich diese nicht verklemmen können.

Die bei der Probenahme nach außen tretende Kolbenstange 20 wird vor der Not-Stopfbuchse 12 über vier O-Ringe abgedichtet. ·

Die den Abschluß des Probeentnahmerohres 27 bildende Sperrbuchse 33 ist ebenfalls mit einer hochtemperaturfesten $Al_2O_3$-Wolle gepackt. Die Wolle dient als Abstreifpackung gegenüber an der Kolbenstange 20 anhaftenden Staubpartikeln. Der Säuberungsvorgang wird durch das in der Packung gegenströmende Sperr- und Kühlgas unterstützt.

In der Figur 2 ist außerdem die Probenahmestellung des Entnahmekolbens 3 dargestellt. Abgebildet ist eine Stellung, in der der Kolben nur teilweise in die Wirbelschicht 28 hineinragt. Es ist aber auch möglich, die Kolbenstange 20 so zu betätigen, daß der Entnahmekolben 3 vollständig in die Wirbelschicht 28 eintaucht. Diese Stellung ist durch die strichlierte Darstellung des hinteren Kolbens 31 angedeutet.

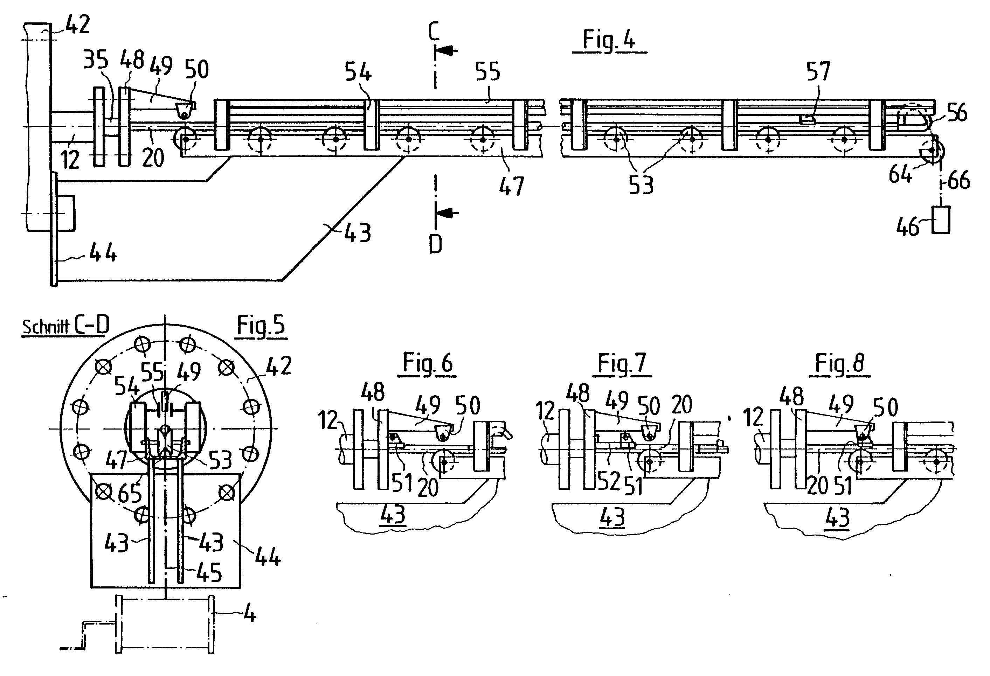

In den Figuren 4 und 5 sind Einzelheiten der Probenahmevorrichtung im Außenbereich dargestellt. Am Endflansch 42 des Probeentnahmebehälters 1 ist eine Halteplatte 44 befestigt, an der zwei Tragkonsolen 43 angebracht sind. Die Tragkonsolen 43 tragen einen Rollenbahnträger 47, in dem Rollen 53 verlagert sind, die zur Führung der Kolbenstange 20 während des Probenahmevorganges dienen. Die Kolbenstange 20 tritt über eine äußere Stopfbuchse 35, die über einen Endflansch 48 der inneren Stopfbuchse 12 nachgeschaltet ist, aus dem Druckbereich der Probeentnahmevorrichtung heraus. Am Ende der Kolbenstange 20 ist das Windenseil 45 an einer Führungsöse 56 angeschlagen. Ihre Hin- und Herbewegung ist über die Winde 4 steuerbar. Auch das Windenseil 45 wird wie die Kolbenstange 20 durch die Rollen 53 geführt. Für das Windenseil 45 ist eine Führungsnut 65 vorgesehen. Ein Gegengewicht 46, dessen Seil 66 ebenfalls an der Öse 56 befestigt ist, läuft über eine Endrolle 64. Zur Verstärkung der Rollenbahn und gleichzeitig als Führung für die Führungsöse 56 sind an den Rollenbahnträger 47 Haltewinkel 54 angebracht, die Führungslaschen 55 tragen.

In den Figuren 6, 7 und 8 sind verschiedene Stellungen der Kolbenstange dargestellt. Bei einem vollen Probenhub (Figur 6) schlägt eine Anschlaglasche 51 an den Endflansch 48 an. In dieser Stellung befindet sich der Entnahmekolben 3 (Figur 2) vollständig in der Wirbelschicht 28.

Bei einem verkürzten Probenhub (Figur 7) ist ein Distanzstück 52 zwischen Anschlaglasche 51 und Endflansch 48 vorgesehen.

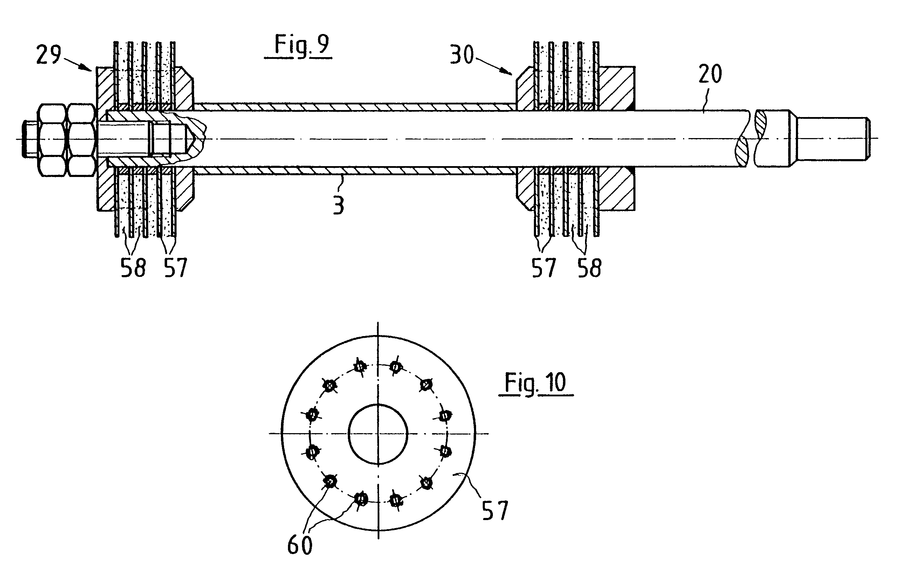

In Figur 8 ist die Ruhestellung des Entnahmekolbens abgebildet, während der Kolben 20 dadurch stillgesetzt wird, daß die Anschlaglasche 51 an der Kolbenstange 20 an eine Anschlaglasche 50 angeschlagen wird, die über eine Traglasche 49 am Endflansch befestigt ist.

Figur 9 zeigt an einem Beispiel Einzelheiten des Entnahmekolbens 3. Die beiden Kolbenringe 29, 30 werden durch je fünf im Abstand voneinander angeordnete Kolbenbleche aus dem hochtemperaturbeständigen Werkstoff Incoloy 800 gebildet, wobei die Zwischenräume durch gepreßt eingelegte Isolierfasermatten 58 aus $Al_2O_3$ ausgefüllt sind. In den Kolbenflächen 57 sind eine Reihe von geschlagenen, nicht entgrateten Löchern 60 vorgesehen, um den Isolierfasermatten 58 einen festen Sitz zu verschaffen. Diese Ausgestaltung der Kolbenringe gewährleistet, daß ein Festfressen des Kolbens dadurch vermieden wird, daß sich die Feststoffpartikel in der weichen elastischen Isolierpackung ablagern.

Das Prinzip der Probeentnahme unter Druck und Temperatur mit der erfindungsgemäßen Probeentnahmevorrichtung ist in den Figuren 11 bis 14 dargestellt.

Figur 11 zeigt den Entnahmekolben 3 in Ruhestellung. Dabei schließt der vordere Dichtkolben 29 in etwa bündig mit der Ausmauerung 22 ab. Das über den Stutzen 13 eingetragene Spül- und Kühlgas, das einen geringen Überdruck gegenüber dem Innendruck des Wirbelbettes 28 aufweist, verhindert, daß Prozeßgas oder Feststoffpartikel in das Entnahmerohr 27 gelangen.

Figur 12 zeigt den Vorgang der Probenahme, bei der der Entnahmekolben 3 in die Wirbelschicht 28 eingeführt wird. Die Kolbenbetätigung erfolgt dabei durch Windenkraft. Das Spül- und Kühlgas verhindert auch bei diesem Vorgang, daß Prozeßgas und Feststoffe in das Entnahmerohr 27 eindringen.

Die an dem Kolben 29 angeordnete Spitze 66 zeigt auf, daß bei entsprechender Ausbildung auch eine Probenahme in einer Feststoffschüttung möglich ist.

Figur 13 zeigt den Entnahmekolben 3 im Entnahmerohr 27 mit der genommenen Feststoffprobe 62. Der Entnahmekolben 3 wird durch den Prozeßdruck WP zur Ausschleusstelle gedrückt. Die Fahrgeschwindigkeit des Kolbens 20 wird dabei über die Winde 4 gesteuert. Die Fahrgeschwindigkeit ist mit 1 bis 2 cm/s vergleichsweise gering. Auch während des Bewegungsvorganges ist der feststofffreie Teil des Entnahmerohres 27 unter Spül- und Kühlgasüberdruck, so daß kein Feststoff oder Prozeßgas aus dem Entnahmekolben 3 austreten kann. Vielmehr wird die Probe durch das gegenströmende Kühl- und Spülgas ($N_2$ im gewählten Beispiel) von ca. 850°C Wirbelschichttemperatur auf ca. 8°C heruntergekühlt. Die gasförmigen Prozeßpartner werden dabei in den Prozeßraum zurückgespült.

In Figur 14 ist der Ausschleusvorgang dargestellt. Der Entnahmekolben 3 befindet sich über dem Schleusentrichter 37, in den die Feststoffprobe zunächst entleert wird. Durch Öffnen des Schiebers 5 gelangt die Feststoffprobe anschließend in die erste Schleuse 6, von dort über den zweiten Feststoffschieber 8 in die zweite Schleuse 9, woraus die Probe dann über die Verschlußklappe 10 abgezogen werden kann.

Anschließend wird der Entnahmekolben 3 mit Windenkraft (bei 40 bar mit ca. 80 kp) wieder in die Ausgangsstellung gefahren. Dabei wird der in das Entnahmerohr 27 nachgeflossene Feststoff in den Prozeßraum 28 zurückgedrückt. Da der Feststoff am Umfang des Kolbenringes 29 durch das dort austretende Spül- und Kühlgas fluidisiert wird, läßt sich dieser Säuberungsvorgang ohne Verklemmen der Kolbenringe 29, 30 durchführen.

**Beispiel**

Die beschriebene Feststoff-Probeentnahmevorrichtung wurde für einen Nenndruck von PN = 64 bar und eine Nennweite von DN = 50 mm Ø ausgelegt und am Gasgenerator einer halbtechnischen Kohlevergasungsanlage montiert. Während des Vergasungsbetriebes wurden bislang ca. hundert Feststoffproben aus dem Prozeßraum, d.h. einem unter max. 850°C und 40 bar betriebenen Kohle-Wasserdampfwirbelbett, störungsfrei gezogen. Die erprobte Schleusengröße läßt eine gewinnbare Probenmenge von ca. 1100 ml Feststoff zu. Die Probe wird in zehn Schiebezyklen gewonnen und dann ausgeschleust. Die erforderliche Zeit dazu beträgt ca. 20 Minuten. Für eilige C-Bestimmungen benötigt man für das Ausschleusen eines Zyklus mit ca. 110 ml Probenmaterial ca. 6 Minuten.

Die eingestellte Spül- und Kühlgasmenge beträgt 3 m³ N/h $N_2$. Damit stellen sich folgende Leerrohr-Strömungsgeschwindigkeiten am Entnahmekolben ein:

a) am Ringschlitz zwischen Kolbenblech und Probeentnahmerohr 46 cm/s
b) in der gezogenen Probe im Doppelkolbenbereich 1 cm/s

Damit sind folgende Punkte sichergestellt:

Zu a) Die im Kolbenbereich eingestellte Strömungsgeschwindigkeit von 46 cm/s 2,3-fache Lockerungsgeschwindigkeit garantiert durch den "fluidisierten Kolben" ein störungsfreies Zurückschieben des eingeflossenen Wirbelbettgutes. (An gezogenen Gasflammmkohle-Wirbelbettproben wurde die einfache Lockerungsgeschwindigkeit ermittelt. Sie lag mit Luft angeströmt bei ca. 20 cm/s. Bei ca. 38 cm/s erfolgte totale Fluidisierung der Probe.)

Zu b) Bei 1 cm/s Strömungsgeschwindigkeit im Doppelkolbenbereich erfolgt in der Probe fast keine Kornbewegung und somit kein Austrag von Feinstkorn.

Ermittelte Ergebnisse an Probenmaterial aus dem Wirbelbett (40 bar, max. 850°C).

Beispielhaft werden im folgenden einige Untersuchungen bezüglich der Korngrößenveränderung mitgeteilt.

Tabelle 1 zeigt die Kornveränderung während eines Satzreaktorversuches. Mit zunehmender Vergasung bis zu einem Vergasungsgrad von 56 % vergrößert sich das mittlere Korn um das 3-fache. Bei weiter fortschreitender Vergasung zerfällt das Korn wieder. Bei einem Vergasungsgrad von 84 % beträgt das mittlere festgestellte Korn 0,39 mm bei diesem Versuch. Die Feststellungen gelten für den Ort der Probenahme im Wirbelbett.

Tabelle 2 zeigt auf, welche Unterschiede in der Kornverteilung zwischen einer direkt gezogenen Probe aus dem Wirbelbett und einer Probe aus dem Ascheberich für den gleichen Versuchszeitraum auftreten.

**Tabelle 1**

Vergasungsrückstände mit unterschiedlichem Vergasungsgrad

Halbtechnische Vergasungsanlage

Einsatzmaterial: Gasflammkohle Westerholt

| Vergasungsgrad | % | Einsatz-material | 56,3 | 62,9 | 75,1 | 83,8 |
|---|---|---|---|---|---|---|
| Wasser | % | 3,4 | 5,1 | 3,0 | 3,7 | 0,4 |
| Asche | % wf | 5,0 | 12,0 | 13,3 | 17,9 | 32,8 |
| Fl. Best. | % wf | 34,0 | 0,9 | 1,0 | 1,1 | 1,3 |
| Kohlenstoff | % wf | 78,2 | 85,0 | 82,8 | 80,2 | 64,7 |
| Wasserstoff | % wf | 5,07 | 1,18 | 1,03 | 1,06 | 0,78 |
| Stickstoff | % wf | 1,47 | 0,6 | 0,38 | 0,45 | 0,25 |
| Schwefel | % wf | 1,44 | 0,35 | 0,23 | 0,12 | 0,04 |
| Sauerstoff | % wf | 8,7 | 1,0 | 2,0 | 0,95 | - |
| Chlor | % wf | - | <0,03 | <0,03 | <0,03 | <0,03 |
| Schüttdichte | g/l | 728 | 126 | 190 | 224 | 256 |
| Rütteldichte | g/l | 892 | 143 | 217 | 260 | 300 |

Aschezusammensetzung

| | | | | | | |
|---|---|---|---|---|---|---|
| $SiO_2$ | % wf | 41,4 | 42,2 | 41,7 | 44,4 | 43,3 |
| $Al_2O_3$ | % wf | 27,2 | 32,0 | 26,0 | 26,4 | 24,8 |
| $TiO_2$ | % wf | 1,0 | 1,0 | 1,1 | 0,9 | 0,7 |
| $Fe_2O_3$ | % wf | 25,0 | 16,5 | 19,0 | 16,0 | 18,7 |
| CaO | % wf | 1,7 | 2,4 | 2,4 | 2,6 | 2,2 |
| MgO | % wf | 0,4 | 0,7 | 1,5 | 2,3 | 2,2 |
| $K_2O$ | % wf | 2,1 | 3,7 | 3,7 | 3,9 | 4,3 |
| $SO_3$ | % wf | 0,1 | n.n* | n.n* | n.n* | n.n* |
| $P_2O_5$ | % wf | 0,3 | 0,7 | 0,7 | 0,7 | 0,6 |

*nicht nachweisbar

Siebanalyse

| | | | | | | | |
|---|---|---|---|---|---|---|---|
| 2 | - 1 | % | 0,5 | 47,8 | 15,8 | 9,0 | 2,1 |
| 1 | - 0,8 | % | 5,1 | 14,2 | 12,6 | 10,1 | 3,8 |
| 0,8 | - 0,63 | % | 7,8 | 14,0 | 16,0 | 13,7 | 10,4 |
| 0,63 | - 0,5 | % | 10,5 | 8,2 | 11,2 | 10,5 | 9,2 |
| 0,5 | - 0,315 | % | 19,5 | 9,2 | 19,4 | 17,7 | 21,4 |
| 0,315 | - 0,2 | % | 20,3 | 4,2 | 14,6 | 16,2 | 23,4 |
| 0,2 | - 0,1 | % | 16,0 | 2,0 | 9,6 | 16,6 | 25,6 |
| 0,1 | - 0,063 | % | 8,3 | 0,4 | 0,6 | 2,6 | 3,4 |
| 0,063 | - 0,05 | % | 2,8 | - | 0,2 | 1,0 | 0,4 |
| <0,05 | | % | 9,2 | - | - | 2,6 | 0,3 |

| Mittlerer Korndurchmesser $\pi$ | mm | 0,33 | 1,02 | 0,66 | 0,53 | 0,39 |
|---|---|---|---|---|---|---|

Danach betrug das mittlere Korn der Einsatzkohle 0,31 mm und das Schüttgewicht 762 kg/m³) für Gasflammkohle Westerholt. Das mittlere Korn der direkten Probe aus dem Wirbelbett betrug 0,53 mm und das Schüttgewicht 160,8 kg/m³, dagegen das mittlere Korn der Probe aus dem Aschebereich 0,36 mm und das Schüttgewicht 480 kg/m³.

Bei diesen Versuchen lag der Vergasungsgrad bei 68 % und die Anströmgeschwindigkeit bei 9,8 cm/s. Die Katalysatorzugabe betrug 4 % $K_2CO_3$.

**Tabelle 2**

| Maschenweite (mm) | Siebrückstand (%) | | |
|---|---|---|---|
| | Einsatzmaterial Gasflammkohle Westerholt | Probe direkt aus dem Wirbelbett | Probe aus dem Aschebereich |
| 2,0 - 1,0 | | | |
| 1,0 - 0,8 | | | |
| 0,8 - 0,63 | 15,7 | 49,4 | 11,5 |
| 0,63 - 0,50 | 9,8 | 11,0 | 13,6 |
| 0,50 - 0,315 | 16,5 | 16,5 | 28,2 |
| 0,315 - 0,20 | 14,5 | 11,6 | 21,0 |
| 0,20 - 0,10 | 18,9 | 8,7 | 17,7 |
| 0,10 - 0,063 | 8,6 | 0,8 | 4,5 |
| 0,063 - 0,050 | 6,5 | 0,3 | 0,8 |
| <0,050 | 9,5 | 1,7 | 2,5 |
| Mittleres Korn dm | 0,31 | 0,53 | 0,36 |
| Schüttgewicht kg/m³ | 762,0 | 160,8 | 480,0 |

Nach dem vorgestellten Verfahrensprinzip ist es technisch möglich, Vorrichtungen zur Ausschleusung von Feststoffproben aus Prozeßräumen mit Drücken von 0 bar bis weit über 100 bar und Temperaturen bis >1000°C auszulegen und zu bauen. Die gewinnbare Probenmenge hängt von der Kolben- und Schleusengröße ab. Zur besseren Handhabung kann die Kolbenbewegung motorisch angetrieben und das Schleusensystem durch ein Regelprogramm gesteuert werden. Von senkrecht bis horizontal ist jede Arbeitsrichtung des Kolbens möglich. Dichtungselemente für den gekühlten Dichtungsbereich in Form von O-Ringen oder Lippendichtungen sind Stand der Technik. Der im Hochtemperaturbereich arbeitende Entnahmekolben könnte bei sehr hohen Temperaturen (~1300°C) aus keramischem Material gefertigt werden. In solchen Fällen würde die Kolbenstange zweckmäßig von innen gekühlt. Zur Entnahme von Proben aus Festbetten wäre die Kolbenfrontseite, wie in Figur 11 bis 14 angedeutet, kegelig schlank auszuführen, damit ein leichteres Eindringen in die Schüttung gewährleistet ist.

1 Probeentnahmebehälter
2 Anschlußstutzen
3 Entnahmekolben
4 Winde
5 erster Feststoffschieber
6 erste Schleuse
7 erste Verschlußklappe
8 zweiter Feststoffschieber
9 zweite Schleuse
10 zweite Verschlußklappe
11 Auffangbehälter
12 Stopfbuchse
13 Stutzen (Sperrgas, Stopfbuchse)
14 Spülgasstutzen (Hilfsspülung)
15 Spülgasstutzen (Hilfsspülung)
16 Spülgasstutzen (Hilfsspülung)

17 Gasaufdrückstutzen
18 Gasentspannstutzen
19 Rollenbahn
20 Kolbenstange
21 Reaktor
22 Wandauskleidung
23 Wirbelschichtdruckreaktor
24 Halterung
25 Isolierdoppelrohr
26 Niederhalter
27 Probeentnahmerohr
28 Wirbelbett
29 vorderer Dichtkolben
30 hinterer Dichtkolben 1. Stellung
31 hinterer Dichtkolben 2. Stellung
32 Isolierfüllung
33 Sperrbuchse

34 Sperrgasraum
35 äußere Isolierbuchse
36 Kolbenendstellung
37 Ausschleustrichter
38 Federelement
39 Bordscheibe
40 Hilfsspülstutzen
41 Hilfsspülstutzen
42 Endflansch
43 Tragkonsole
44 Halteplatte
45 Windenseil
46 Gegengewicht
47 Rollenbahnträger
48 Endflansch

49 Traglasche
50 Anschlaglasche
51 Anschlaglasche
52 Distanzstück
53 Rolle
54 Haltewinkel
55 Führungslasche
56 Führungsöse
57 Kolbenblech
58 Isolierfasermatten
59 Entnahmeöffnung
60 geschlagene, nicht entgratete Löcher
61 klappbare Filterdeckel
62 Feststoffprobe
63 Wandöffnung
64 Endrollen
65 Führungsnut
66 Eindrückkegel

## Patentansprüche

1. Entnahmevorrichtung für Feststoffproben aus einem Behälter, bei der ein Entnahmekolben (3) mit einen Proberaum bildenden und zu diesem gasdurchlässigen Kolbenringen (29, 30) über eine mit einem Antrieb versehene Kolbenstange (20) in einem Probeentnahmerohr (27) bewegt wird, das am reaktorseitigen Ende offen ist und die Reaktorwand (21, 22) durchdringt und das eine Entnahmeöffnung (59) aufweist, an die ein Austragsschacht (37) angeschlossen ist, wobei eine Gaszuführung (14) zur Spülung des Probenraumes vorgesehen ist,
dadurch gekennzeichnet, daß das Probeentnahmerohr (27) in einem an der Reaktorwand (21, 22) eines Druckreaktors (23) befestigten Isolierdoppelrohr (25) geführt, von einem Probeentnahmebehälter (1) umgeben und an einem Ende fest damit verbunden ist sowie über eine gasdurchlässige Sperrbuchse (33) gegenüber einer Sperrgaskammer (34) mit Gaseinlaß (13) für Sperr-, Spül- und Kühlgas abgegrenzt ist, die Entnahmeöffnung (59) über einen Ausschleustrichter (37) an eine als Doppelschleuse ausgebildete Ausschleusvorrichtung (5, 6, 7, 8, 9, 10) angeschlossen ist, die Kolbenringe (29, 30) des Entnahmekolbens (3) parallel zur Kolbenstange (20) in beiden Richtungen gasdurchlässig ausgebildet sind und weitere Ein- und Auslaßöffnungen (15, 16) für Spül- und Kühlgas im Probeentnahmebehälter (1) und im Ausschleustrichter (37) vorgesehen sind.

2. Entnahmevorrichtung nach Anspruch 1,
dadurch gekennzeichnet, daß die Kolbenringe (29, 30) des Entnahmekolbens (3) aus mehreren Kolbenblechen (57) mit dazwischen angeordneter Isolierschicht (58) aufgebaut sind.

3. Entnahmevorrichtung nach den Ansprüchen 1 oder 2,
dadurch gekennzeichnet, daß das Probeentnahmerohr (27) an einem Ende durch eine Sperrbuchse (33) verschlossen ist.

4. Entnahmevorrichtung nach Anspruch 1 und einem oder mehreren der folgenden Ansprüche,
dadurch gekennzeichnet, daß die Kolbenstange (20) des Entnahmekolbens (3) über O-Ringe und eine Not-Stopfbuchse (12) aus dem Probenahmebehälter (1) herausgeführt und über ein Seil (45) mittels Winde (4) betätigbar und auf einer Rollenbahn (19) geführt ist.

5. Entnahmevorrichtung nach Anspruch 1 und einem oder mehreren der folgenden Ansprüche, dadurch gekennzeichnet, daß die Ausschleusvorrichtung für die Feststoffproben aus einem im Probeentnahmebehälter (1) unter der Entnahmeöffnung (59) angeordneten Ausschleustrichter (37), einem ersten Feststoffschieber (5), einer ersten Schleuse (6) mit Aufdrückstutzen (17), einer ersten Verschlußklappe (7), einem zweiten Feststoffschieber (8), einer zweiten Schleuse (9) mit Entspannungsstutzen (18), einer zweiten Verschlußklappe (10) und einem Auffangbehälter (11) besteht.

## Claims

1. Device for sampling solid materials from a container, in which an extraction piston (3) with piston rings (29, 30) which form a sample chamber and are gas permeable relative thereto is moved by a piston rod (20) provided with a driving means in a sample extraction tube (27) which is open at the reactor end and penetrates the reactor wall (21, 22) and which comprises an extraction opening (59) to which an outlet duct (37) is connected, a gas supply (14) being provided for purging the sample chamber, characterised in that the sample extraction tube (27) is guided in an insulated double tube (25) fixed on the reactor wall (21, 22) of a pressure reactor (23), is surrounded by a sample extraction container (1) and is connected rigidly thereto at one end, and is limited by means of a gas-permeable blocking bush (33) from a barrier gas chamber (34) with gas inlet (13) for barrier, purging and cooling gas, the extraction opening (59) is connected via a lock funnel (37) to a lock device (5, 6, 7, 8, 9, 10) designed as a double lock, the piston rings (29, 30) of the extraction piston (3) are constructed so as to be gas-permeable and parallel to the piston rod (20) in both directions and further inlet and outlet openings (15, 16) for purging and cooling gas are provided in the sample extraction container (1) and in the lock funnel (37)

2. Sampling device according to Claim 1, characterised in that the piston rings (29, 30) of the extraction piston (3) are constructed from several piston plates (57) with an interposed insulating layer (58).

3. Sampling device according to Claims 1 or 2, characterised in that the sample extraction tube (27) is sealed at one end by a blocking bush (33)

4. Sampling device according to Claim 1 and one or more of the following claims, characterised in that the piston rod (20) of the extraction piston (3) is driven out of the sample receiving container (1) via O-rings and a safety gland (12) and can be actuated via a cable (45) by a winch (4) and is guided on a roller conveyor (19).

5. Sampling device according to Claim 1 and one or more of the following claims, characterised in that the lock device for the solid material samples consists of a lock funnel (37) arranged below the extraction opening (59) in the sample extraction container (1), a first solid material slide valve (5), a first lock (6) with inlet nozzle (17), a first sealing flap (7), a second solid material slide valve (8), a second lock (9) with release nozzle (18), a second sealing flap (10) and a receiver (11).

## Revendications

1. Dispositif de prise d'échantillons de matière solide à partir d'un récipient, dans lequel un piston échantillonneur (3) formant une chambre d'échantillonnage et pourvu de segments (29, 30) perméables aux gaz vers celle-ci, est déplacé par une tige de piston (20) pourvue d'un dispositif d'entraînement dans un tube (27) de prise d'échantillons qui est ouvert du côté du réacteur et qui traverse la paroi (21, 22) du réacteur et présente une ouverture de prise (59) à laquelle est raccordé un puits d'évacuation (37), une amenée de gaz (14) étant prevue pour rincer la chambre d'échantillonnage, caractérisé en ce que le tube (27) de prise d'échantillons est guidé dans un tuyau double d'isolation (25) fixé à la paroi de réacteur (21, 22) d'un réacteur sous pression (23), et est entouré d'un récipient (1) de prise d'échantillons et est relié rigidement à celui-ci à une extrémité et est limité, par un manchon d'arrêt (33) perméable aux gaz, par rapport à une chambre (34) d'arrêt de gaz, avec une entrée de gaz (13) pour du gaz d'arrêt, de lavage et de rinçage, l'ouverture de prise (59) étant raccordée par un entonnoir d'éclusage (37) à un dispositif d'éclusage (5, 6, 7, 8, 9, 10) constitué d'une écluse double, les segments de piston (29, 30) du piston échantillonneur (3) étant réalisés de manière perméable aux gaz dans les deux sens, parallèlement à la tige de piston (20), et d'autres ouvertures d'entrée et de sortie (15, 16) étant prévues pour le gaz de rinçage et de refroidissement dans le récipient (1) de prise d'échantillons et dans l'entonnoir d'éclusage (37).

2. Dispositif de prise suivant la revendication 1, caractérisé en ce que les segments de piston (29, 30) du piston échantillonneur (3) sont faits de plusieurs tôles de piston (57) avec des couches isolantes (58) disposées entre elles.

3. Dispositif de prise suivant la revendication 1 ou la revendication 2, caractérisé en ce que le tube (27) de prise d'échantillons est fermé à une extrémité par un manchon d'arrêt (33).

4. Dispositif de prise suivant la revendication 1 ou plusieurs des revendications suivantes, caractérisé en ce que la tige de piston (20) du piston échantillonneur (3) est conduite au dehors du récipient (1) de prise d'échantillons par l'intermédiaire de bagues toriques et d'un presse-étoupe de sécurité (12) et est actionnable par un câble (45) au moyen d'un treuil (4) et est guidée sur un train de roulement à galets (19).

5. Dispositif de prise suivant la revendication 1 et une ou plusieurs des revendications suivantes, caractérisé en ce que le dispositif d'éclusage pour les échantillons de matière solide est constitué d'un entonnoir d'éclusage (37) disposé dans le récipient de prise d'échantillons en dessous de l'ouverture de prise (59), d'une première valve à tiroir (5) pour matière solide, d'une première écluse (6) avec une tubulure de mise sous pression (17), d'une première valve de fermeture (7), d'une deuxième valve à tiroir (8) pour matière solide, d'une deuxième écluse (9) avec une tubulure de détente (18), d'une deuxième valve de fermeture (10) et d'un récipient collecteur (11).

Fig. 1

EP 0 161 535 B1

EP 0 161 535 B1

Fig. 4

C

D

42 35 48 49 50 54 55 57 56

12 20 47 43 53 64 66 46 44

Schnitt C-D Fig. 5

55 49
54 42
47 53
65
43 43
45
44
4

Fig. 6

48 49 50
12
51 20
43

Fig. 7

48 49 50 20
12
52 51
43

Fig. 8

48 49 50
12
20 51
43

Fig. 9

Fig. 10

Fig. 11

Fig. 12

Fig. 13

Fig. 14